# EUROPÄISCHE PATENTANMELDUNG

(11) **EP 3 587 110 A2**
(43) Veröffentlichungstag der Anmeldung: **01.01.2020**
(21) Anmeldenummer: 19178182.2
(22) Anmeldetag: 04.06.2019
(51) Int. Cl.: B33Y 10/00, B33Y 80/00, B22F 3/105, B22F 5/10, F16L 39/00, F28D 7/10, F28F 9/26, F28F 1/00, F28F 1/06, F01N 13/14, F01N 13/18, F16L 9/18, F16L 11/15

(54) **METALLISCHE ROHRLEITUNGSANORDNUNG MIT GENERATIV HERGESTELLTEM ANSCHLUSSTEIL**

(30) Priorität: 29.06.2018 DE 102018115854
(71) Anmelder: Witzenmann GmbH, 75175 Pforzheim (DE)
(72) Erfinder: Cycon, Alexander, 75228 Ispringen (DE); Drouart, Nicolas, 75331 Grunbach (DE); Duss, Nea, 76139 Karlsruhe (DE); Hardjosoekatmo, Alyssa, 14532 Kleinmachnow (DE); Rothfuß, Daniel, 75334 Straubenhardt (DE); Wiedensohler, Yannick, 75203 Königsbach-Stein (DE)
(74) Vertreter: Lemcke, Brommer & Partner Patentanwälte Partnerschaft mbB

(57) **Zusammenfassung**

Vorschlagen wird eine metallische Rohrleitungsanordnung (1) mit einem Rohrleitungsteil (2) und mit einem Anschlussteil (4) aus Metall, bei der das Anschlussteil (4) mittels eines generativen Herstellverfahrens hergestellt ist, sowie mit einem metallischen Adapterteil (3), welches Adapterteil (3) zwischen dem Rohrleitungsteil (2) und dem Anschlussteil (4) angeordnet ist.

## Beschreibung

Die Anmeldung betrifft eine metallische Rohrleitungsanordnung gemäß Anspruch 1 sowie ein Verfahren zu deren Herstellung gemäß Anspruch 14.

Generative Herstellverfahren, sogenannter 3D-Druck, erfreuen sich zunehmender Beliebtheit - insbesondere, weil sich mit derartigen Verfahren Strukturen und Geometrien schaffen lassen, die mit klassischen Herstellverfahren entweder gar nicht oder nur unter großem Kostenaufwand realisierbar waren bzw. sind. Das betrifft nicht nur die Kunststoffverarbeitung, weil sich auch metallische Gegenstände durch entsprechende generative Verfahren erzeugen lassen, beispielsweise nach dem Pulverbettverfahren, mit dessen Hilfe sich komplexe Geometrien auf einer planaren Schicht aufbauen lassen. Auch so genannte Auftrags-Schweißverfahren sind in diesem Zusammenhang bekannt.

In der Vergangenheit wurde bereits versucht, flexible (metallische) Leitungselemente generativ herzustellen, vergleiche DE 10 2015 206 251 A1 oder DE 10 2016 207 309 A1. Es hat sich aber gezeigt, dass derartige flexible Leitungselemente von ihren Eigenschaften her nicht an herkömmlich hergestellte flexible Leitungselemente, beispielsweise Bälge oder Ringwellschläuche, heranreichen.

Aus dem Stand der Technik ist bekannt, Anschlussteile an speziell dünnwandige Leitungselemente aus Metall, beispielsweise in Form von Ringwellschläuchen oder Bälgen, anzuschweißen oder anzulöten. Dabei ist als nachteilig anzusehen, dass es aufgrund der starken Wärmeeintragung zu einem Verzug der Anschlussteile und/oder zu einer Zerstörung des Leitungselements kommen kann. Außerdem stellt die Zugänglichkeit des Anbindebereichs oftmals ein Problem dar, wenn beispielsweise aufgrund einer Geometrie des Anschlussteils das Werkzeug (zum Beispiel ein Schweißbrenner) nicht direkt bis in die Anbindebereiche geführt werden kann.

Der Erfindung liegt die Aufgabe zugrunde, die inhärenten Vorteile generativer Herstellungsverfahren auf dem Gebiet speziell auch der dünnwandigen metallischen Rohrleitungen nutzbar zu machen.

Diese Aufgabe wird gelöst durch eine metallische Rohrleitungsanordnung mit den Merkmalen des Anspruchs 1 sowie durch ein Verfahren zu deren Herstellung mit den Merkmalen des Anspruchs 14. Vorteilhafte Weiterbildungen der erfindungsgemäßen Idee sind Gegenstand von Unteransprüchen.

Erfindungsgemäß ist eine metallische Rohrleitungsanordnung mit einem metallischen Rohrleitungsteil und mit einem Anschlussteil aus Metall dadurch gekennzeichnet, dass das Anschlussteil mittels eines generativen Herstellverfahrens hergestellt und somit quasi direkt an das Rohrleitungsteil "angedruckt" ist. Speziell bei 3D-Druck auf Metallbasis ist es so möglich, das Anschlussteil quasi direkt an das Rohrleitungsteil anzuschweißen bzw. mit diesem zu verschmelzen. Um eine definierte Anbindefläche für das Anschlussteil bereitzustellen und um eine Beschädigung speziell eines dünnwandigen Rohrleitungsteils zu vermeiden, ist erfindungsgemäß zusätzlich noch ein metallisches Adapterteil vorgesehen, welches Adapterteil zwischen dem Rohrleitungsteil und dem Anschlussteil angeordnet ist, sodass eine Verbindung zwischen Rohrleitungsteil und Anschlussteil über das Adapterteil erfolgt.

Auf diese Weise kommt es nicht mehr zu einem Verzug des Anschlussteils oder einer Beschädigung des Rohrleitungsteils aufgrund zu starker Wärmeeintragung. Außerdem ist die so geschaffene metallische Rohrleitungsanordnung hinsichtlich Platzbedarf und Zugänglichkeit optimiert.

Erfindungsgemäß können auf diese Weise Anschlussteile verwendet bzw. geschaffen werden, die hinsichtlich ihrer Form und Geometrie mit herkömmlichen Herstellverfahren gar nicht oder nur schwer herstellbar wären. Darüber hinaus ist bei dem Verbinden von Rohrleitungsteil und Anschlussteil die Zugänglichkeit des Verbindungsbereichs nur noch von untergeordneter Bedeutung, da das Anschlussteil direkt bzw. indirekt über das Adapterteil mit dem Rohrleitungsteil verbunden wird. Eine Zugänglichkeit des Verbindungsbereichs von außen, um hier beispielsweise mittels eines Schweißbrenners einwirken zu können, ist grundsätzlich nicht mehr erforderlich. Es sind deshalb beispielsweise auch Anschlussteile verwendbar bzw. herstellbar, die bis über den Verbindungsbereich zum Rohrleitungselement hinaus zurückgebogen sind, während es bei "klassisch" hergestellten Anschlussteilen sonst nicht oder nur schwer möglich gewesen wäre, eine (Schweiß-)Verbindung zwischen Anschlussteil und Rohrleitungsteil herzustellen.

Eine erste Weiterbildung der erfindungsgemäßen Rohrleitungsanordnung sieht vor, dass das Rohrleitungsteil als dünnwandiges, flexibles Bauteil mit einer Wandstärke < 1 mm, vorzugsweise < 0,5 mm, höchst vorzugsweise < 0,1 mm, ausgebildet ist. Speziell bei solchen Rohrleitungsteilen kommen die bereits erwähnten Vorteile der Erfindung voll zur Geltung, weil es hier nach dem Stand der Technik oftmals gar nicht möglich gewesen wäre, eine sichere Verbindung zwischen Anschlussteil und Rohrleitungsteil zu schaffen, ohne Letzteres zu beschädigen.

Bei einer anderen Weiterbildung der erfindungsgemäßen Rohrleitungsanordnung kann vorgesehen sein, dass das Rohrleitungsteil zumindest abschnittsweise als Balg oder Wellschlauch ausgebildet ist. Speziell derartige Rohrleitungsteile zeichnen sich in der Praxis durch eine äußerst geringe Wanddicke und große Flexibilität aus.

Bei einer wieder anderen Weiterbildung der erfindungsgemäßen Rohrleitungsanordnung kann vorgesehen sein, dass der Balg oder Wellschlauch von einer Außenkomponente umgeben ist. Bei dieser Außenkomponente kann es sich um einen Geflechtschlauch oder eine Geflechtummantelung handeln, welche den Balg oder Wellschlauch vor Schadeinwirkung und/oder übermäßiger Verformung schützt.

Außerdem kann in Weiterbildung der erfindungsgemäßen Rohrleitungsanordnung noch vorgesehen sein, dass das Rohrleitungsteil, das Adapterteil und das Anschlussteil zumindest abschnittweise mehrwandig, vorzugsweise doppelwandig, ausgebildet sind. Solche doppelwandigen Rohrleitungsanordnungen können insbesondere zum Zwecke der Leckagevermeidung bzw. Leckageortung eingesetzt werden. Vorzugsweise steht dabei der Raum zwischen den beiden Wandungen mit einem geeigneten Sensorelement in Wirkverbindung, welches Sensorelement anspricht, falls der innere Leitungsraum eine Undichtigkeit aufweisen sollte und ein darin geführtes Medium in den Zwischenwandbereich eindringt.

Im Zuge einer wieder anderen Weiterbildung der erfindungsgemäßen Rohrleitungsanordnung kann dann noch vorgesehen sein, dass in einem Bereich zwischen Wandungen des Rohrleitungsteils und/oder des Adapterteils und/oder des Anschlussteils ein Füllmaterial, vorzugsweise ein Isolierwerkstoff, angeordnet ist. Auf diese Weise lassen sich insbesondere Wärmeverluste vermeiden.

Als besonders vorteilhaft hat es sich erwiesen, wenn ein solcher Isolierwerkstoff zwischen Lagen des generativ hergestellten Anschlussteils eingebracht wird. Dies kann bereits während des generativen Herstellens des Bauteils erfolgen.

Bei einer anderen Weiterbildung der erfindungsgemäßen Rohrleitungsanordnung kann vorgesehen sein, dass das Anschlussteil generativ auf dem Adapterteil hergestellt wurde. In diesem Zusammenhang kann es vorteilhaft sein, wenn das Adapterteil eine entsprechende ebene Oberfläche aufweist, um definierte Randbedingungen für das generative Herstellverfahren zu schaffen. Des Weiteren kann vorgesehen sein, dass das Adapterteil kraftschlüssig und/oder stoffschlüssig an dem Rohrleitungsteil befestigt ist. Auf diese Weise schützt das Adapterteil das Rohrleitungsteil, insbesondere den Wellschlauch oder Balg, und schafft die bereits angesprochene plane Fläche für den Aufbau des generativ hergestellten Anschlussteils.

Im Zuge wieder einer anderen Weiterbildung der erfindungsgemäßen Rohrleitungsanordnung kann das Adapterteil wenigstens einen Durchbruch aufweisen, bei welchem Durchbruch das Rohrleitungsteil und das Anschlussteil fluidtechnisch verbunden sind. Weiterhin kann vorgesehen sein, dass dieser Durchbruch zumindest bei der Herstellung des Anschlussteils mit einer entfernbaren Verschlusseinrichtung verschlossen ist. Hierdurch lässt sich sicherstellen, dass während der generativen Herstellung des Anschlussteils keine Verschmutzungen (z.B. Metallpulver) insbesondere in das Rohrleitungsteil hineingelangen, die anschließend zeit- und kostenaufwändig wieder entfernt werden müssten. Entsprechend sieht eine andere Weiterbildung der erfindungsgemäßen Rohrleitungsanordnung noch vor, dass die Verschlusseinrichtung aus Wachs, einem Knetmaterial, als Metallfolie, als Abberstscheibe oder in Form eines einstückig mit dem Adapterteil gefertigten Stegs ausgebildet ist. Allen diesen Verschlusseinrichtungen ist gemein, dass sie nach Herstellung des generativen Anschlussteils in einfacher Weise entfernt werden können, um den mindestens einen Durchbruch des Adapterteils freizugeben, damit Anschlussteil und Rohrleitungsteil in fluidtechnischer Verbindung stehen. Als besonders vorteilhaft hat sich die Ausbildung der Verschlusseinrichtung als einstückig mit dem Adapterteil gefertigter Steg erwiesen, welcher entsprechend dünn ausgebildet sein sollte, sodass er durch bloße Druckbeaufschlagung der Rohrleitungsanordnung zerstört und entsprechend entfernt werden kann.

Eine wieder andere Weiterbildung der erfindungsgemäßen Rohrleitungsanordnung sieht vor, dass das Adapterteil ein erstes, äußeres Ringteil und ein zweites, inneres Ringteil aufweist. Die genannten Ringteile sind konzentrisch angeordnet und über Abstandelemente, wie Stege, miteinander verbunden. Dabei kann an dem ersten Ringteil, vorzugsweise dessen Außenoberfläche, ein erstes, äußeres Leitungselement festgelegt sein, vorzugsweise stoffschlüssig oder kraftschlüssig. An dem zweiten Ringteil kann ein zweites, inneres Leitungselement festgelegt sein, vorzugsweise an dessen Innenoberfläche, höchst vorzugsweise stoffschlüssig oder kraftschlüssig. Auf diese Weise lässt sich die bereits oben angesprochene mehrwandige Anordnung realisieren, wobei vorzugsweise auch das Anschlussteil entsprechend mehrwandig ausgebildet sein sollte.

Es ist jedoch nicht erforderlich, dass insbesondere das zweite, innere Leitungselement direkt mit dem Adapterteil verbunden ist. Bei einer anderen Ausgestaltung der erfindungsgemäßen Rohrleitungsanordnung ist entsprechend vorgesehen, dass zumindest das zweite Leitungselement indirekt über ein Hülsenteil an dem zweiten Ringteil festgelegt ist. Gleiches kann auch für das erste Leitungselement gelten.

Es wurde bereits darauf hingewiesen, dass im Zuge einer entsprechenden Weiterbildung der erfindungsgemäßen Rohrleitungsanordnung das erste Leitungselement und/oder das zweite Leitungselement, insgesamt also das Rohrleitungsteil, eine Außenkomponente aufweisen kann. Diese Außenkomponente ist vorzugsweise in Form einer Geflechtummantelung ausgebildet, die höchst vorzugsweise mittels einer Endhülse an dem betreffenden Leitungselement festgelegt ist.

Es wurde auch bereits darauf hingewiesen, dass das Rohrleitungsteil als Balg oder Wellschlauch ausgebildet sein kann. Entsprechend kann bei einer anderen Weiterbildung der erfindungsgemäßen Rohrleitungsanordnung vorgesehen sein, dass das erste Leitungselement und/oder das zweite Leitungselement als Wellschlauch oder Balg ausgebildet und mit einem glattzylindrischen Anschlussabschnitt jeweils mit dem betreffenden Ringteil verbunden ist. Auf diese Weise lassen sich je nach Anforderung speziell ausgebildete, mehr oder weniger flexible Rohrleitungsanordnungen schaffen.

Es wurde auch bereits darauf hingewiesen, dass bei entsprechender Weiterbildung der erfindungsgemäßen Rohrleitungsanordnung ein Sensor zur Leckageortung vorgesehen sein kann. Entsprechend sieht eine andere Weiterbildung der erfindungsgemäßen Rohrleitungsanordnung vor, dass ein spezielles Anschlussteil gekrümmt und/oder mehrwandig und/oder mit einer Anschlussöffnung für einen Sensor oder dergleichen ausgebildet ist. Die Anschlussöffnung für den Sensor kann mit dem Inneren des zweiten, inneren Leitungselements oder auch mit dem Zwischenwandbereich in Wirkverbindung stehen.

Bei einem erfindungsgemäßen Verfahren zum Herstellen einer metallischen Rohrleitungsanordnung mit einem Rohrleitungsteil mit einem Anschlussteil aus Metall, bei dem ein metallisches Adapterteil zwischen dem Rohrleitungsteil und dem Anschlussteil angeordnet wird, vorzugsweise eingesteckt oder verpresst, kann nach dem Vorstehenden vorgesehen sein, dass anschließend das Anschlussteil mittels eines generativen Herstellverfahrens auf dem Adapterteil hergestellt wird.

In Weiterbildung dieses Verfahrens kann vorgesehen sein, dass wenigstens ein Durchbruch an dem Adapterteil, über welchen Durchbruch das Rohrleitungsteil und das Anschlussteil fluidtechnisch verbunden sind, vor oder bei der Herstellung des Anschlussteils mit einer entfernbaren Verschlusseinrichtung verschlossen ist oder wird.

Auf Vorteile dieser Verfahrensdurchführung wurde weiter oben bereits hingewiesen.

Weitere Eigenschaften und Vorteile der Erfindung ergeben sich aus der nachfolgenden Beschreibung von Ausführungsbeispielen anhand der Zeichnung.
- Figur 1: zeigt schematisch eine erfindungsgemäße metallische Rohrleitungsanordnung mit einem Rohrleitungsteil, einem Anschlussteil und einem Adapterteil;
- Figur 2: zeigt einen Längsschnitt durch das Adapterteil aus Figur 1;
- Figur 3: zeigt zwei Ansichten eines Anschlussteils;
- Figur 4: zeigt mehrere verschiedene Ansichten eines anderen Anschlussteils;
- Figur 5: zeigt einen Schnitt durch eine Anordnung aus Adapterteil und Rohrleitungselement;
- Figur 6: zeigt die Anordnung aus Figur 5 in einer stirnseitigen Ansicht; und
- Figur 7: zeigt ein Detail gemäß dem Buchstaben B in Figur 5.

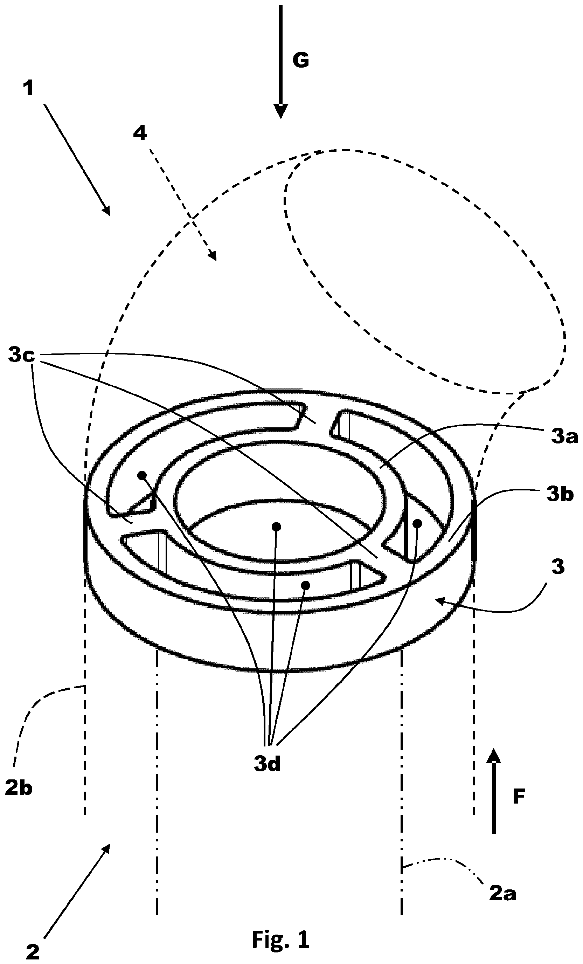

In Figur 1 ist eine metallische Rohrleitungsanordnung gezeigt, die insgesamt mit dem Bezugszeichen 1 bezeichnet ist. Die metallische Rohrleitungsanordnung 1 umfasst ein Rohrleitungsteil 2, welches Rohrleitungsteil 2 mehrwandig ausgebildet ist und ein inneres Rohrleitungsteil oder Leitungselement 2a sowie ein äußeres Rohrleitungsteil (Leitungselement) 2b aufweist, die konzentrisch und koaxial angeordnet sind. Beide Rohrleitungsteile 2a, 2b sind als dünnwandige, flexible Bauteile aus Metall mit einer Wandstärke < 1 mm, vorzugsweise < 0,5 mm, höchst vorzugsweise < 0,1 mm, ausgebildet. Insbesondere kommt eine Ausbildung als Wellschläuche oder dergleichen in Betracht. An dem in Figur 1 dargestellten Ende des Rohrleitungselements 2 ist ein metallisches Adapterteil 3 angeordnet, welches Adapterteil 3 vorzugsweise kraftschlüssig und/oder stoffschlüssig an dem Rohrleitungsteil 2 befestigt ist, beispielsweise durch Verpressen, Verschweißen oder Verlöten. Das Adapterteil 3 ist im Wesentlichen aus zwei konzentrisch angeordneten Ringteilen, nämlich einem inneren Ringteil 3a und einem äußeren Ringteil 3b, gebildet, die über radiale Stege (Abstandelemente) 3c miteinander verbunden sind. Das äußere Ringteil 3b dient zum Befestigen des äußeren Rohrleitungsteils 2b, während das innere Ringteil 3a zum Befestigen des inneren Rohrleitungsteils 2a dient.

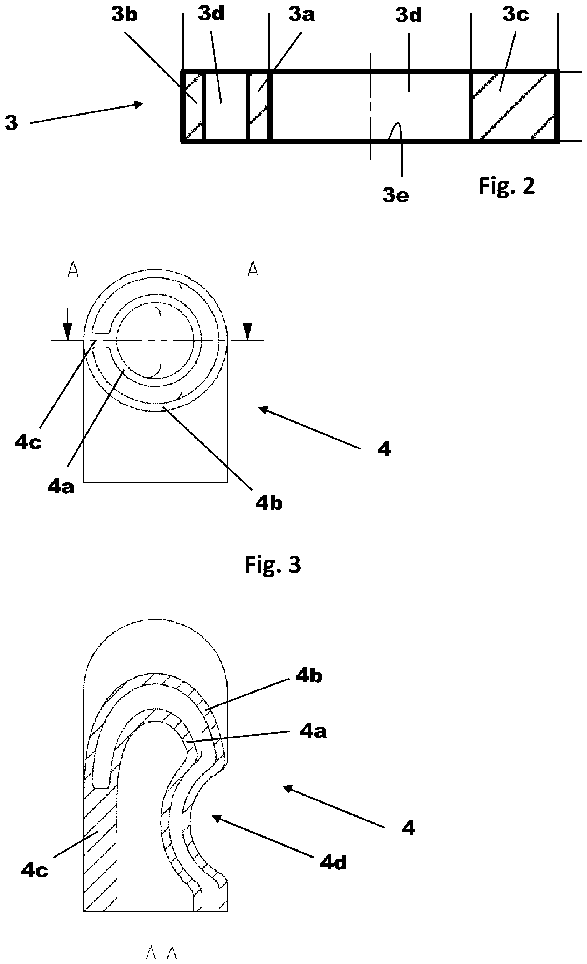

Auf der dem Rohrleitungsteil 2 abgewandten Seite des Adapterteils 3 ist ein nur schematisch angedeutetes Anschlussteil 4 aus Metall angeordnet, welches Anschlussteil 4 mittels eines generativen Herstellverfahrens (3D-Druck) hergestellt ist. Das Anschlussteil kann zumindest abschnittweise mehrwandig, vorzugsweise doppelwandig, ausgebildet sein. Es wurde generativ auf dem Adapterteil 3 hergestellt, zu welchem Zweck Durchbrüche 3d des Adapterteils 3, über welche Durchbrüche 3d das Rohrleitungsteil 2 und das Anschlussteil 4 fluidtechnisch verbunden sind, bei der Herstellung des Anschlussteils 4 mit einer entfernbare Verschlusseinrichtung (nicht gezeigt) verschlossen waren. Eine solche Verschlusseinrichtung kann aus Wachs, einem Knetmaterial, als Metallfolie, Abberstscheibe oder in Form eines einstückig mit dem restlichen Adapterteil 3 gefertigten Stegs ausgebildet sein. Hierauf wird weiter unten anhand von Figur 2 noch genauer eingegangen.

In Figur 1 bezeichnet der Pfeil G eine Vorzugsrichtung des generativen Herstellverfahrens für das Anschlussteil 4, wie es beispielsweise nach einem an sich bekannten Pulverbettverfahren hergestellt werden kann. Der Pfeil F in Figur 1 bezeichnet eine Fügerichtung des Rohrleitungsteils 2, um dieses mit dem Adapterteil 3 zu verbinden.

In Figur 2 ist das Adapterteil 3 aus Figur 1 im Längsschnitt dargestellt. Man erkennt wiederum das äußere Ringteil 3b, das innere Ringteil 3a, einige Durchbrüche 3d sowie einen der Stege 3c. An der unteren Stirnseite des Adapterteils 3 kann ein flächig durchgängiger Metallsteg 3e ausgebildet sein, der das Adapterteil 3 bzw. die Durchbrüche 3d einseitig verschließt. Auf diese Weise soll verhindert werden, dass beim generativen Herstellen des Anschlussteils 4 (vgl. Figur 1) Verschmutzungen (Pulver) durch die Durchbrüche 3d in die Rohrleitungsanordnung 1 und insbesondere in das Rohrleitungsteil 2 gelangen. Wenn der Steg 3e dünn genug ausgebildet ist, lässt er sich anschließend durch entsprechenden Druck nach Art einer Abberstscheibe entfernen, um über die Durchbrüche 3d eine Fluidverbindung zwischen Rohrleitungsteil 2 und Anschlussteil 4 (vgl. Figur 1) zu gewährleisten. Alternativ kann das Adapterteil 1 auch - wie bereits angesprochen - mit einer anderen (entfernbaren) Verschlusseinrichtung verschlossen werden, beispielsweise mit einer Verschlusseinrichtung aus Wachs, einem Knetmaterial, einer (aufgeklebten) Metallfolie oder dergleichen. Die genannte Metallfolie kann entsprechend dem Steg 3e in Figur 2 auf das Adapterteil 3 aufgeklebt werden. Falls Wachs oder ein Knetmaterial verwendet wird, wird dieses vorzugsweise direkt in die Durchbrüche 3d eingebracht, um diese zu verschließen.

Figur 3 zeigt in zwei Ansichten eine mögliche Ausgestaltung des generativ hergestellten Anschlussteils 4 (vgl. Figur 1). Das Anschlussteil ist - wie das Rohrleitungsteil 2 und das Adapterteil 3 - doppelwandig ausgebildet und weist ein inneres Anschlussteil 4a sowie ein äußeres Anschlussteil 4b auf, die über einen Steg 4c miteinander verbunden sind. Gemäß der Schnittdarstellung A-A (unten in Figur 3) kann das insgesamt als Rohrbogen ausgestaltete Anschlussteil 4 bei Bezugszeichen 4d eine Abflachung aufweisen. Ein derartiges Anschlussteil wäre mit "klassischen" Herstellverfahren nur sehr aufwändig oder gar nicht herstellbar.

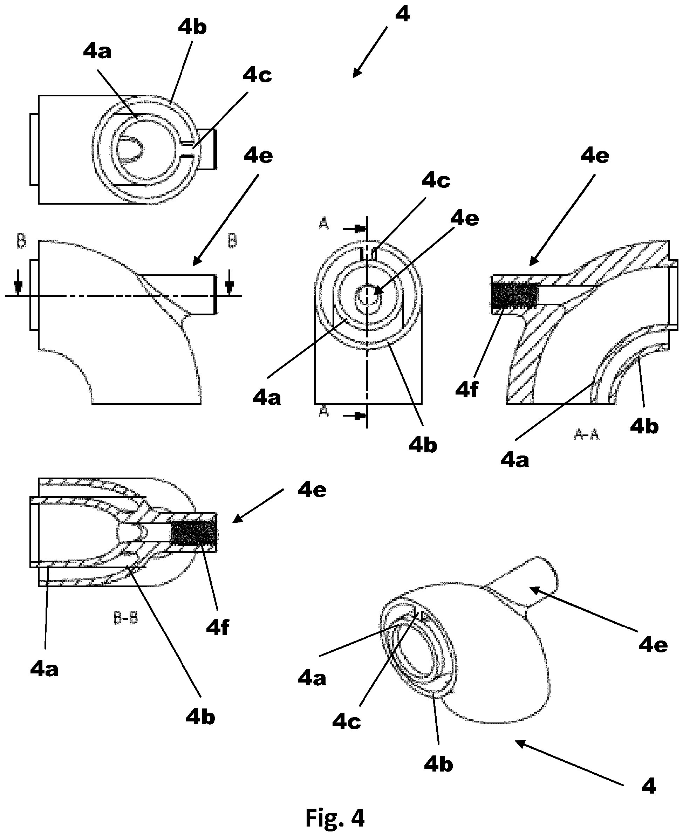

In Figur 4 ist in mehreren verschiedenen Ansichten eine weitere mögliche Ausgestaltung des Anschlussteils 4 dargestellt, wie es sich nur mit generativen Herstellverfahren einfach herstellen lässt. Das Anschlussteil 4 ist wiederum grundsätzlich nach Art eines doppelwandigen Rohrbogens ausgestaltet, weist jedoch anstelle der zuvor beschriebenen Abflachung bei Bezugszeichen 4e einen Sensorabgang oder Sensoranschluss auf, in dessen Innengewinde 4f ein geeigneter Sensor (nicht gezeigt) einschraubbar ist.

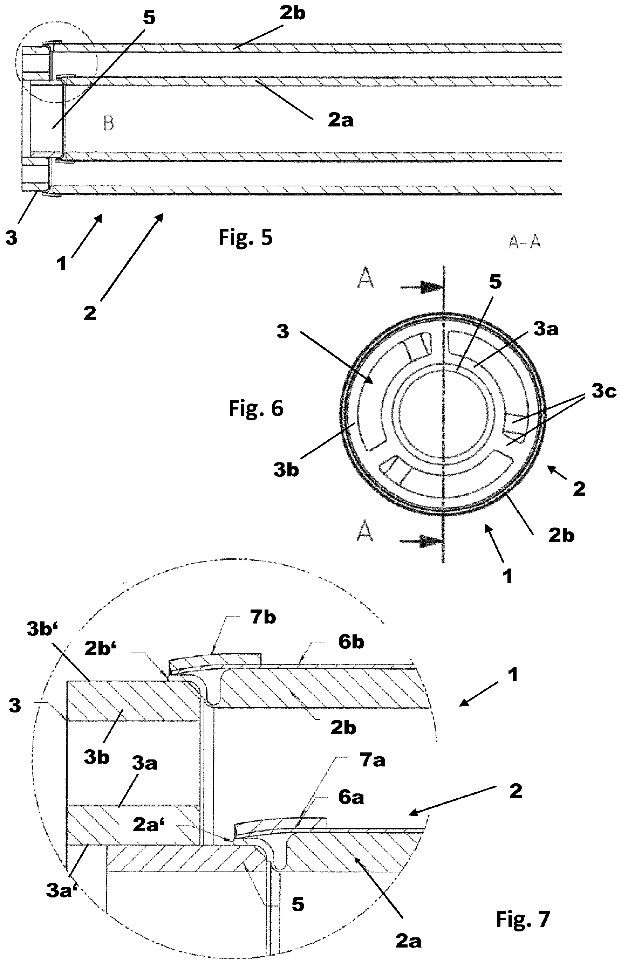

Figur 5 zeigt eine andere Ausgestaltung der metallischen Rohrleitungsanordnung 1 ohne das Anschlussteil, umfassend ein wiederum doppelwandig ausgebildetes Rohrleitungsteil 2 und Adapterteil 3, wie vorstehend beispielsweise anhand von Figur 2 detailliert beschrieben. Während das äußere Rohrleitungsteil 2b direkt mit dem Adapterteil 3 verbunden ist, wie weiter unten anhand von Figur 7 noch genauer dargestellt wird, ist das innere Rohrleitungsteil 2a indirekt über eine Hülse 5 mit dem Adapterteil verbunden. Auch dies weiter unten anhand von Figur 7 noch genauer dargestellt.

Wie die Darstellung in Figur 6 zeigt, ist die Anordnung gemäß Figur 5 auch an dem dort nicht gezeigten, zweiten Ende der Rohrleitungsanordnung 1 vergleichbar ausgebildet, sodass in Figur 6 zwei Adapterteile 3 in Längsrichtung der Anordnung hintereinander erkennbar sind, wie anhand der gegeneinander verdreht angeordneten Stege 3c deutlich wird.

Figur 7 zeigt detailliert eine Ausschnittsvergrößerung bei Bezugszeichen B in Figur 5. Wie erkennbar wird, ist sowohl das innere Rohrleitungselement 2a als auch das äußere Rohrleitungselement 2b als Wellschlauch mit glattzylindrischem Ende ausgebildet und an seiner jeweiligen Außenseite von einer Au-βenkomponente in Form einer Geflechtummantelung 6a, 6b umgeben. Zur Fixierung der Geflechtummantelung 6a, 6b auf dem jeweiligen Rohrleitungselement 2a, 2b ist jeweils eine äußere Endhülse 7a, 7b vorgesehen, um die Geflechtummantelung 6a, 6b in an sich bekannter Weise kraft- und/oder stoffschlüssig an dem Rohrleitungselement 2a, 2b zu fixieren. Das äußere Rohrleitungselement 2b ist mit seinem endständigem Bord 2b' direkt außen an dem Adapterteil 3 festgelegt, wie dargestellt, insbesondere stoffschlüssig und/oder kraftschlüssig. Entsprechend ist das innere Rohrleitungselement 2a mit seinem endständigen Bord 2a' an dem Hülsenteil 5 festgelegt. Auf dem Adapterteil 3 kann anschließend das Anschlussteil 4 (vgl. Figur 1) generativ erzeugt werden. Entsprechend ist also das äußere Leitungselement 2b an einer Außenoberfläche 3b' des Adapterteils 3 bzw. des Ringteils 3b festgelegt, während das innere Leitungselement 2a indirekt über das Hülsenteil 5 an dem Ringteil 3a des Adapterteils 3 festgelegt ist, und zwar an dessen Innenoberfläche 3a'.

## Patentansprüche

1. Metallische Rohrleitungsanordnung (1) mit einem Rohrleitungsteil (2) und mit einem Anschlussteil (4) aus Metall, bei der das Anschlussteil (4) mittels eines generativen Herstellverfahrens hergestellt ist, sowie mit einem metallischen Adapterteil (3), welches Adapterteil (3) zwischen dem Rohrleitungsteil (2) und dem Anschlussteil (4) angeordnet ist.

2. Metallische Rohrleitungsanordnung (1) nach Anspruch 1, bei der das Rohrleitungsteil (2) als dünnwandiges, flexibles Bauteil mit einer Wandstärke kleiner 1 mm, vorzugsweise kleiner 0,5 mm, höchst vorzugsweise kleiner 0,1 mm, ausgebildet ist.

3. Metallische Rohrleitungsanordnung (1) nach Anspruch 1, bei der das Rohrleitungsteil (2) zumindest abschnittweise als Balg oder Wellschlauch ausgebildet ist, der vorzugsweise mit einer Außenkomponente (6a, 6b) umgeben ist.

4. Metallische Rohrleitungsanordnung (1) nach Anspruch 1, bei der das Rohrleitungsteil, das Adapterteil (3) und das Anschlussteil (4) zumindest abschnittweise mehrwandig, vorzugsweise doppelwandig, ausgebildet sind.

5. Metallische Rohrleitungsanordnung (1) nach Anspruch 4, bei der in einem Bereich zwischen Wandungen des Rohrleitungsteils und/oder des Adapterteils und/oder des Anschlussteils ein Füllmaterial, vorzugsweise ein Isolierwerkstoff, angeordnet ist.

6. Metallische Rohrleitungsanordnung (1) nach Anspruch 1, bei der das Anschlussteil (4) generativ auf dem Adapterteil (3) hergestellt wurde und/oder bei der das Adapterteil (3) kraftschlüssig und/oder stoffschlüssig an dem Rohrleitungsteil (2) befestigt ist.

7. Metallische Rohrleitungsanordnung (1) nach Anspruch 1, bei der das Adapterteil (3) wenigstens einen Durchbruch (3d) aufweist, über welchen Durchbruch (3d) das Rohrleitungsteil (2) und das Anschlussteil (4) fluidtechnisch verbunden sind, welcher Durchbruch (3d) zumindest bei der Herstellung des Anschlussteils (4) mit einer entfernbaren Verschlusseinrichtung verschlossen ist.

8. Metallische Rohrleitungsanordnung (1) nach Anspruch 7, bei der die Verschlusseinrichtung aus Wachs, einem Knetmaterial, als Metallfolie, Abberstscheibe oder in Form eines einstückig mit dem Adapterteil (3) gefertigten Stegs (3c) ausgebildet ist.

9. Metallische Rohrleitungsanordnung (1) nach Anspruch 1, bei der das Adapterteil (3) ein erstes, äußeres Ringteil (3b) und ein zweites, inneres Ringteil (3a) aufweist, die konzentrisch angeordnet und über Abstandelemente (3c) miteinander verbunden sind, an welchem ersten Ringteil (3b), vorzugsweise an dessen Außenoberfläche (3b'), ein erstes, äußeres Leitungselement (2b) festgelegt ist, vorzugsweise stoffschlüssig oder kraftschlüssig, und an welchem zweiten Ringteil (3a) ein zweites, inneres Leitungselement (2a) festgelegt ist, vorzugsweise an dessen Innenoberfläche (3a'), höchst vorzugsweise stoffschlüssig oder kraftschlüssig.

10. Metallische Rohrleitungsanordnung (1) nach Anspruch 9, bei der das zweite Leitungselement (2a) indirekt über ein Hülsenteil (5) an dem zweiten Ringteil (3a) festgelegt ist.

11. Metallische Rohrleitungsanordnung (1) nach Anspruch 9, bei der das erste Leitungselement (2b) und/oder das zweite Leitungselement (2a) eine Au-βenkomponente aufweist, vorzugsweise eine Geflechtummantelung (6a, 6b), die höchst vorzugsweise mittels einer Endhülse (7a, 7b) an dem betreffenden Leitungselement (2a, 2b) festgelegt ist.

12. Metallische Rohrleitungsanordnung (1) nach Anspruch 9, bei der bei der das erste Leitungselement (2b) und/oder das zweite Leitungselement (2a) als Wellschlauch oder Balg ausgebildet und in einem glattzylindrischen Anschlussabschnitt mit dem betreffenden Ringteil (3a, 3b) verbunden ist.

13. Metallische Rohrleitungsanordnung (1) nach Anspruch 1, bei der das Anschlussteil (4) gekrümmt und/oder mehrwandig und/oder mit einer Anschlussöffnung für einen Sensor oder dgl. ausgebildet ist.

14. Verfahren zum Herstellen einer metallischen Rohrleitungsanordnung (1) mit einem Rohrleitungsteil (2) und mit einem Anschlussteil (4) aus Metall, bei dem ein metallisches Adapterteil (3) zwischen dem Rohrleitungsteil (2) und dem Anschlussteil (4) angeordnet wird, vorzugsweise eingesteckt oder verpresst, und dann das Anschlussteil (4) mittels eines generativen Herstellverfahrens auf dem Adapterteil (3) hergestellt wird.

15. Verfahren nach Anspruch 14, bei dem wenigstens ein Durchbruch (3d) in dem Adapterteil (3), über welchen Durchbruch (3d) das Rohrleitungsteil (2) und das Anschlussteil (4) fluidtechnisch verbunden sind, vor oder bei der Herstellung des Anschlussteils (4) mit einer entfernbaren Verschlusseinrichtung verschlossen ist oder wird.
